# EUROPÄISCHE PATENTSCHRIFT

(11) **EP 1 537 059 B1**
(45) Veröffentlichungstag und Bekanntmachung des Hinweises auf die Patenterteilung: **11.11.2015**
(21) Anmeldenummer: 03775145.0
(22) Anmeldetag: 02.09.2003
(51) Int. Cl.: C04B 35/576, C04B 38/00, C04B 38/06, F16C 33/04

(54) **GESINTERTE SILICIUMCARBIDKÖRPER MIT OPTIMIERTEN TRIBOLOGISCHEN EIGENSCHAFTEN IHRER GLEIT- BEZIEHUNGSWEISE DICHTFLÄCHEN**
SINTERED SILICON CARBIDE BODIES WITH OPTIMISED TRIBOLOGICAL PROPERTIES FOR THE SLIDE AND SEALING SURFACES THEREOF
CORPS EN CARBURE DE SILICIUM FRITTE PRESENTANT DES SURFACES DE GLISSEMENT OU D'ETANCHEITE QUI ONT DES PROPRIETES TRIBOLOGIQUES OPTIMISEES

(30) Priorität: 06.09.2002 DE 10241265
(43) Veröffentlichungstag der Anmeldung: 08.06.2005
(73) Patentinhaber: CeramTec GmbH, 73207 Plochingen (DE)
(72) Erfinder: MEIER, Gerd, 91227 Leinburg (DE); BÖTTCHER, Jürgen, 90542 Eckental-Eschen (DE); ELTERLEIN, Konstantin, 91233 Neunkirchen (DE); STEINER, Matthias, 90552 Röthenbach (DE); KÄFER, Dieter, 91338 Pettensiedel (DE); SIMMERL, Matthias, 91239 Henfenfeld (DE)
(74) Vertreter: Uppena, Franz
(86) Internationale Anmeldenummer: PCT/EP2003/009748
(87) Internationale Veröffentlichungsnummer: WO 2004/022507

(56) Entgegenhaltungen:
- EP-A- 0 486 336
- EP-A- 0 578 408
- US-A- 5 080 378
- DATABASE INSPEC [Online] THE INSTITUTION OF ELECTRICAL ENGINEERS, STEVENAGE, GB Inspec No. 6632000, Februar 2000 SE-WON YOON ET AL: 'Properties and manufacture of [beta]-SiC-ZrB2 composites densified by liquid-phase sintering. II' Database accession no. 6632000 & TRANSACTIONS OF THE KOREAN INSTITUTE OF ELECTRICAL ENGINEERS, C KOREAN INST. ELECTR. ENG. SOUTH KOREA Bd. 49, Nr. 2, Seiten 92 - 97 ISSN: 1229-246X

## Beschreibung

Die Erfindung betrifft gesinterte Siliciumcarbidkörper mit einer definierten Porosität und dadurch bedingten optimalen tribologischen Eigenschaften ihrer Gleit- beziehungsweise Dichtflächen.

Der Werkstoff Siliciumcarbid hat nicht nur außergewöhnlich gute thermische, chemische und mechanische Eigenschaften. Aufgrund einer einstellbaren Porosität ist es zusätzlich möglich, den Werkstoff dort einzusetzen, wo schwierige tribologische Verhältnisse herrschen. Insbesondere dort, wo die Gefahr besteht, ) dass zwischen zwei sich gegeneinander bewegenden Gleitflächen in Folge eines Mangels an Schmiermittel Trockenreibung entsteht, dienen die an die Oberfläche tretenden offenen Poren als Schmiermittelreservoir. Diese Eigenschaft wird beispielsweise bei Gleit- und Dichtringen genutzt.

Weil die Porosität nicht nur auf die Reibung zwischen zwei Werkstücken Einfluss hat, sondern auch auf die Festigkeit eines Werkstoffs, ist eine sorgfältige Auswahl der Porendurchmesser, der Anzahl der Poren pro Volumeneinheit des Werkstoffs sowie der Verteilung der Poren im Werkstoff erforderlich. Die Poren dürfen nicht so groß sein, dass sie den Werkstoff schwächen und ihre Anzahl darf nicht dazu führen, dass sich die Poren untereinander verbinden und zu schwammartigen Strukturen führen. Dadurch würden beispielsweise Dichtringe ihre Funktion verlieren. Andererseits dürfen die Poren nicht so klein sein, dass das flüssige Medium, das als Schmiermittel dienen soll, aufgrund seiner Oberflächenspannung nicht in die Poren eindringt und sie nicht füllt oder nicht aus den Poren austritt.

Aus dem europäischen Patent EP 0 578 408 B1 ist ein Siliciumcarbid-Sinterkörper mit einer Porosität im Bereich von 2 bis 12 Vol.-% bekannt, wobei die freien Poren einen Nenndurchmesser zwischen 50 und 500 µm aufweisen, die Poren geschlossen sind und die Poren gleichmäßig innerhalb des Körpers verteilt sind.

In der europäischen Patentanmeldung EP 0 578 408 A2 dagegen werden die Merkmale des Anspruchs 1 des Patents mit dem Unterschied beansprucht, dass die Form der Poren sphärisch und der Durchmesser ein mittlerer Durchmesser sein soll.

Aus der europäischen Patentanmeldung EP 0 486 336 A1 sowie dem darauf erteilten Patent ist ein Sinterkörper auf Siliciumcarbid-Basis bekannt, der frei von imprägniertem Silicium ist und der im wesentlichen geschlossene Poren in einer näherungsweise kugeligen Form mit einem mittleren Durchmesser in einem Bereich zwischen 40 und 200 µm beziehungsweise 60 und 200 µm und eine Gesamtporosität zwischen 4 und 18 % aufweist.

In der US-Patentschrift 5,080,378 wird ein gesinterter Siliciumcarbidkörper beschrieben, der als Dichtring eingesetzt wird. Bei einer Porosität von 4 bis 13 Vol.-% haben die Poren einen mittleren Durchmesser von 10 bis 40 µm. Die Poren sind rundlich, d.h. sie dürfen keine Kanten aufweisen, damit in dem an den Poren angrenzenden Werkstoff bei Beanspruchung keine Spannungsspitzen auftreten können.

Aufgabe der vorliegenden Erfindung ist es, Sinterkörper aus Siliciumcarbid vorzustellen, die aufgrund des Anteils an Poren mit einem definierten Nenndurchmesser optimal auf die jeweiligen tribologischen Verhältnisse abstimmbar sind.

Die Lösung der Aufgabe erfolgt erfindungsgemäß durch einen gesinterten Siliciumcarbidkörper mit den kennzeichnenden Merkmalen des ersten Anspruchs sowie nach einem Verfahren nach Ansprüche 3-5. Vorteilhafte Ausgestaltungen der Erfindung werden in den abhängigen Ansprüchen beansprucht.

Die erfindungsgemäßen gesinterten Siliciumcarbidkörper sind gekennzeichnet durch eine Gesamtporosität von 2 bis 12 Vol.-% und kugelförmigen Poren mit einem Nenndurchmesser, der zwischen 10 µm und 48 µm liegt, wobei die Poren gleichmäßig im Werkstoff des Sinterkörpers verteilt sind. Vorzugsweise haben die kugelförmigen Poren einen Nenndurchmesser von 15 µm bis 45 µm.

Es wird bewusst ein enger Bereich der Porendurchmesser gewählt, denn dadurch entstehen auf der Gleitfläche der Sinterkörper, die durch eine Oberflächenbearbeitung, beispielsweise durch Schleifen, Läppen, Polieren, die gefordete Oberflächengüte erhält, offene Poren mit Öffnungen, die den maximalen Nenndurchmesser der Poren nicht überschreiten und die gleichmäßig über die Oberfläche verteilt sind. Diese Poren bewirken sehr gleichmäßig auf der Gleitfläche verteilte Schmiermittelreservoire, die eine homogene Verteilung des Schmiermittels für den Notlauf auf der Gleitfläche ermöglichen. Dadurch sind an jeder Position der Gleitfläche gleichförmige Notlaufeigenschaften gewährleistet.

Die enge Begrenzung des Bereichs der Porendurchmesser, die Verteilung der Porengrößen über die Gesamtmenge der Poren sowie die Porosität werden vorteilhaft durch die Auswahl und die Menge der Porosierungsmittel bestimmt. Ist beispielsweise ein Durchmesserbereich der kugelförmigen Poren von 30 µm bis 48 µm gewünscht, sind Porosierungsmittel mit einem minimalen Teilchendurchmesser von 36 µm und einem maximalen Teilchendurchmesser von 57 µm einzusetzen, wenn ein technisches Aufmaß des Werkstücks von 20 % zugrundegelegt wird, womit die lineare keramische Schwindung von 16,7 % berücksichtigt wird. Das technische Aufmaß ist wie folgt definiert: Von dem Maß vor dem Sintern wird das Maß nach dem Sintern abgezogen. Die Differenz wird durch das Maß nach dem Sintern dividiert. Das Ergebnis ist das technische Aufmaß. Die keramische Schwindung ist wie folgt definiert: Von dem Maß vor dem Sintern wird das Maß nach dem Sintern abgezogen. Die Differenz wird durch das Maß vor dem Sintern dividiert. Das Ergebnis ist die keramische Schwindung.

Zur Erzeugung der gewünschten Porengrößen müssen unter Berücksichtigung der Schwindung beim Sintern der Siliciumcarbidkörper die Porosierungsmittel entsprechend konfektioniert werden, beispielsweise durch Trocken- oder Naßsieben. Durch aus dem Stand der Technik bekannte Mahlverfahren können zuvor die gewünschten Ausgangskorngrößen für die anorganischen Rohstoffe erzeugt werden.

Als Porosierungsmittel sind nur Stoffe geeignet, die sich derart aus dem Werkstoff des Bauteils entfernen lassen, dass die kugelförmigen Poren in dem gewünschten Durchmesserbereich entstehen. Als Porosierungsmittel werden sogenannte Ausbrennstoffe verwendet wie beispielsweise von den Polymeren Polymethylmethacrylat (PMMA), Polyethylen (PE) oder Polystyrol (PF), von den Wachsen Paraffinwachse oder Polyethylenwachse und Naturprodukte wie Stärke oder Cellulose.

Die Porosierungsmittel werden in an sich bekannter Weise den anorganischen, keramischen Ausgangsstoffen der Sinterkörper beigemischt, In der Regel erfolgt das durch Suspendieren in einem geeigneten flüssigen Medium, anschließendem Mischen mit den anorganischen Ausgangsstoffen, Zugabe und Homogeniseren der organischen Bindemittel und nachfolgendem Sprühtrocknen (Sprühgranulierung). Möglich ist aber auch die Suspendierung in einer Suspension, bestehend aus einem flüssigem Medium mit den bereits darin gelösten Bindemitteln und den keramischen Rohstoffen. Die Formgebung erfolgt durch Formpressen.

Bei der Auswahl der Porosierungsmittel ist darauf zu achten, dass sie nicht durch Krafteinwirkung zerstört oder deformiert werden, beispielsweise beim Mischen mit dem anorganischen keramischen Schlicker durch die Scher- und Mahlwirkung. Ebenso dürfen die Porosierungsmittel bei der Formgebung durch Pressen kein zu starkes Rückfederungsverhalten aufweisen. Das würde beim Entlasten der Presslinge zu Spannungsrissen in dem gepressten Grünkörper führen. Eine Verdichtung der Porosierungsmittel, verbunden mit einer geringfügigen Deformation während des Press- und Verdichtungsvorgangs kann toleriert werden.

Werden die keramischen Ausgangsstoffe in Wasser suspendiert, müssen die Porosierungsmittel wasserunlöslich, mindestens aber in Wasser schwer löslich sein. Über diese Eigenschaften verfügen beispielsweise native Stärken, die sich in kaltem Wasser nicht lösen, wenn sie zuvor keiner chemischen oder thermischen Behandlung unterzogen wurden. Jede Stärkesorte, je nach Herkunft als Mais-, Reis- oder Weizenstärke definiert, ist durch einen bestimmten Durchmesser der kugelförmigen Stärkepartikel gekennzeichnet, so dass die Porosität und die Porendurchmesser im Werkstoff eines Sinterkörpers gezielt eingestellt werden können.

Nach der Formgebung der Siliciumcarbidkörper als Grünkörper, die mittels eines Pressverfahrens erfolgt, werden in einer dem Sinterprozeß vorgeschalteten Temperaturbehandlung, der Pyrolyse, sowohl die organischen Bindemittel als auch die als Platzhalter für die Poren eingebrachten Porosierungsmittel vollständig oder zumindest nahezu vollständig aus dem Werkstoff des Presskörpers entfernt. Die erfindungsgemäß eingesetzten Porosierungsmittel zersetzen sich vollständig und hinterlassen als Zersetzungsrest eventuell lediglich geringe Mengen an Kohlenstoff. Diese Reste von Kohlenstoff bewirken aber beim nachfolgendem Sintern keine negative Beeinflussung der Zusammensetzung und der Eigenschaften des Werkstoffs. Das Sintern der so vorbehandelten Presskörper erfolgt analog dem Sintern von Formkörpern aus Siliciumcarbid ohne Porosierung, wie es aus dem Stand der Technik bekannt ist.

Nach dem Sintern erfolgt eine Bearbeitung der Funktionsoberflächen mittels der aus dem Stand der Technik bekannten Verfahren wie Schleifen, Läppen und Polieren, wobei die Bearbeitung vorzugsweise mit Diamantpulver beziehungsweise Diamantwerkzeugen erfolgt. Je nach Anforderungsprofil ist es nicht erforderlich, alle drei Verfahren anzuwenden. Es können auch einzelne Bearbeitungsverfahren oder die Kombination von zwei Verfahren genügen, beispielsweise nur Schleifen oder Läppen beziehungsweise Schleifen und Polieren oder Schleifen und Läppen. Nach diesen Bearbeitungsverfahren muss die Oberfläche sorgfältig gereinigt werden, um die Poren freizulegen und den eventuell eingedrungenen abgetragenen Werkstoff der Oberfläche zu beseitigen. Das kann beispielsweise durch Reinigen in Ultraschallbädern erfolgen.

Anhand von vier Ausführungsbeispielen wird die Erfindung näher erläutert. Es zeigen:
- Figur 1:: Aufnahme des Porosierungsmittels Polymethylmethacrylat (PMMA), lichtmikroskopische Aufnahme,
- Figur 2:: eine lichtmikroskopische Aufnahme eines Schliffbildes der Oberfläche eines Ausführungsbeispiels mit einer Porosität von 4,77 %,
- Figur 3:: ein erfindungsgemäßer Dichtring,
- Figur 4:: eine lichtmikroskopische Aufnahme eines Schliffbildes der Oberfläche eines Ausführungsbeispiels mit einer Porosität von 6,04 %,
- Figur 5:: eine lichtmikroskopische Aufnahme eines Schliffbildes der Oberfläche eines Ausführungsbeispiels mit einer Porosität von 3,77 % und
- Figur 6:: eine lichtmikroskopische Aufnahme eines Schliffbildes der Oberfläche eines Aus führungsbeispiels mit einer Porosität von 7,69 %.

Der anorganische, der keramische Werkstoff, setzt sich aus folgenden Komponenten zusammen: Alpha-Siliciumcarbid (SiC), Zirkondiborid (ZrB₂), Kohlenstoff (C) und Bor (B). Zur Herstellung der Grünkörper werden Dispergiermittel und Bindemittel eingesetzt wie beispielsweise Wachsbinder Polyethylenglycolbinder und Acrylatbinder.

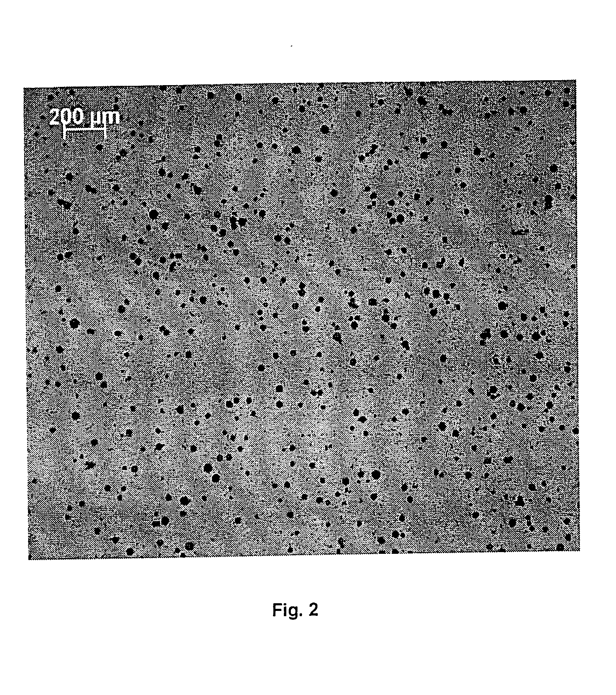

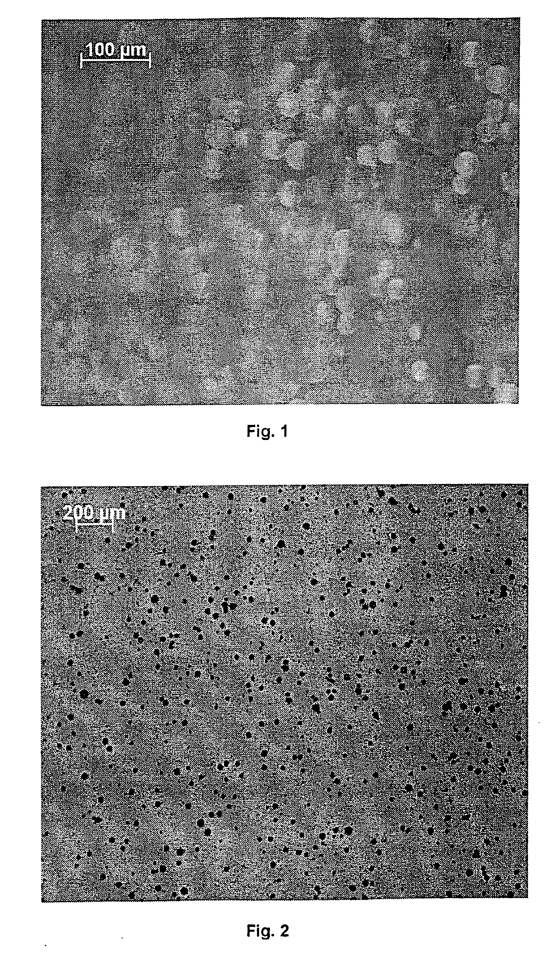

Um die Poren zu erzeugen, wird bei den vorliegenden Beispielen Polymethylmethacrylat (PMMA) zugegeben. Figur 1 zeigt eine lichtmikroskopische Aufnahme des Porosierungsmittels PMMA. Deutlich zu erkennen ist die ideale kugelförmige Gestalt der Teilchen. Ihr Durchmesser liegt im Bereich von 18 µm bis 57 µm, wobei der Anteil der Teilchen mit Durchmessern zwischen 20 µm und 45 µm bei 80% der Gesamtmenge liegt. Durch die Reduktion der Teilchengröße aufgrund der linearen keramischen Sinterschwindung von 16,7% liegt der mögliche minimale Nenndurchmesser der Poren bei 15 µm, der maximale bei 48 µm und der durchschnittliche bei 30 µm.

### Ausführungsbeispiel 1:

### Gesamtzusammensetzung zu 100%:

**Anorganische Werkstoffe:**

| | |
|---|---|
| Alpha-Siliciumcarbid (SiC) | 77,70 % |
| Zircondiborid (ZrB₂) | 9,22 % |
| Kohlenstoff (C) | 2,98 % |
| Bor (B) | 0,45 % |

**Organische Bestandteile (Binder, Dispergiermittel):**

| | |
|---|---|
| Dispergiermittel | 2,14 % |
| Wachsbinder | 1,81 % |
| Polyethylenglykolbinder | 1,81 % |
| Acrylatbinder | 1,81 % |

**Porosierungsmittel:**

| | |
|---|---|
| Polymethylmethacrylat (PMMA) | 2,08 % |

Die homogenisierten, vorgemahlenen anorganischen Rohstoffe entsprechend der oben angegebenen Gesamtzusammensetzung wurden in Wasser mit dem darin gelösten Dispergiermittel und den organischen Bestandteilen 30 min dispergiert, anschließend erfolgte die Zugabe des Porosierungsmittels PMMA, das wiederum 30 min dispergiert wurde. Nach Zugabe und Homogenisierung der organischen Bindemittel wurde die Suspension sprühgetrocknet, um ein pressfähiges Sprühgranulat zu erhalten.

Das Sprühgrahulat wurde uniaxial zu Vollzylindern mit einem Durchmesser von 20 mm und einer Höhe von 8 mm verpresst. Die Vollzylinder wurden unter Schutzgasatmosphäre 120 min lang bei einer Temperatur von 2070°C gesintert. Durch die Dichtebestimmung wurde eine Gesamtporosität von 4,77% ermittelt. Figur 2 zeigt die Verteilung der Poren auf der angeschliffenen und polierten Oberfläche.

Die Größe der definiert eingebrachten Poren ergibt sich aus der Teilchengrößenverteilung des eingebrachten Porosierungsmittels (Figur 1) durch Reduktion der Teilchengrößen um die keramische Schwindung von 16,7%, wie oben erläutert.

Für die Ausführungsbeispiele 2 bis 4 wurden, abweichend vom Ausführungsbeispiel 1, die anorganischen und die organischen Komponenten wie im Ausführungsbeispiel 1 miteinander gemischt und danach ein pressfähiges Sprühgranulat hergestellt. In dieses wurde das Porosierungsmittel PMMA trocken eingebracht und die Dispersion trocken durchgeführt.

Die Werkstoffzusammensetzung der Ausführungsbeispiele 2 bis 4 weicht von der des Ausführungsbeispiels 1 geringfügig ab.

### Ausführungsbeispiel 2:

### Gesamtzusammensetzung zu 100%:

**Anorganische Werkstoffe:**

| | |
|---|---|
| Alpha-Siliciumcarbid (SiC) | 77,18 % |
| Zircondiborid (ZrB₂) | 9,15 % |
| Kohlenstoff (C) | 2,96 % |
| Bor (B) | 0,45% |

**Organische Bestandteile (Binder, Dispergiermittel):**

| | |
|---|---|
| Dispergiermittel | 2,16 % |
| Wachsbinder | 1,79 % |
| Polyethylenglykolbinder | 1,79 % |
| Acrylatbinder | 1,79 % |

**Porosierungsmittel:**

| | |
|---|---|
| Polymethylmethacrylat (PMMA) | 2,73 % |

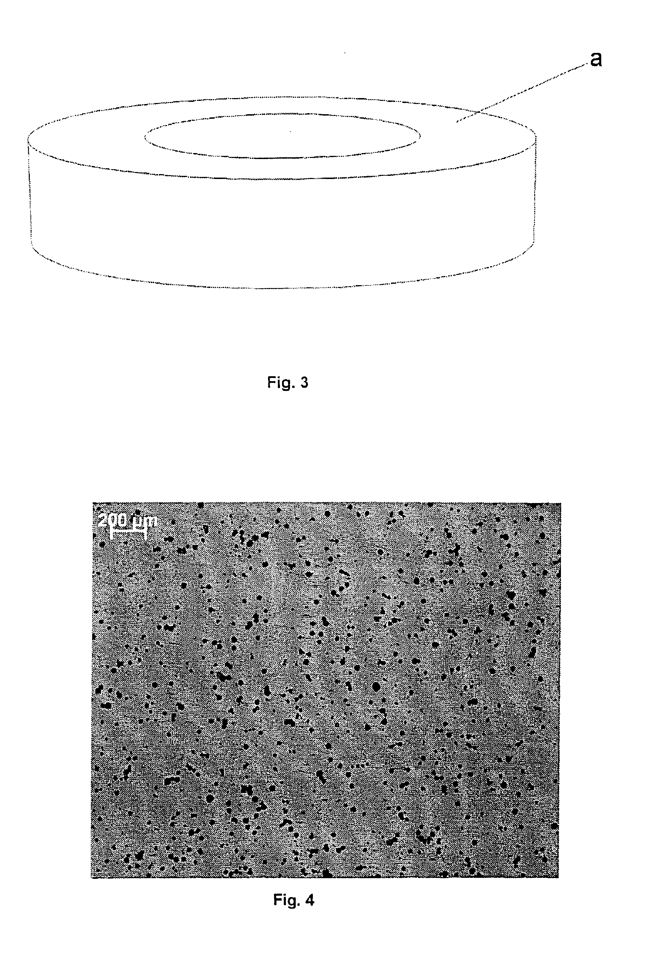

Ein Sprühgranulat mit der oben angegebenen Stoffzusammensetzung wurde mit dem Porosierungsmittel PMMA in der angegebenen Partikelgröße in folgendem Mengenverhältnis trocken gemischt: Sprühgranulat: 97,27% und PMMA: 2,73%. Diese Mischung wurde uniaxial zu Gleitringen gemäß der schematischen Darstellung in Figur 3 verpresst und unter Schutzgasatmosphäre 120 min lang bei einer Temperatur von 2070°C gesintert. Durch die Dichtebestimmung wurde eine Gesamtporosität von 6,04% ermittelt. Der Nenndurchmesser der Poren liegt in dem selben Bereich wie beim Ausführungsbeispiel 1. Figur 4 zeigt die Verteilung der Poren auf der angeschliffenen Oberfläche der gesinterten Ringe, in Figur 3 mit a bezeichnet.

### Ausführungsbeispiel 3:

### Gesamtzusammensetzung zu 100%:

**Anorganische Werkstoffe:**

| | |
|---|---|
| Alpha-Siliciumcarbid (SiC) | 77,94 % |
| Zircondiborid (ZrB₂) | 9,24 % |
| Kohlenstoff (C) | 2,99 % |
| Bor (B) | 0,45% |

**Organische Bestandteile (Binder, Dispergiermittel):**

| | |
|---|---|
| Dispergiermittel | 2,17 % |
| Wachsbinder | 1,81 % |
| Polyethylenglykolbinder | 1,81 % |
| Acrylatbinder | 1,81 % |

**Porosierungsmittel:**

| | |
|---|---|
| Polymethylmethacrylat (PMMA) | 1,78 % |

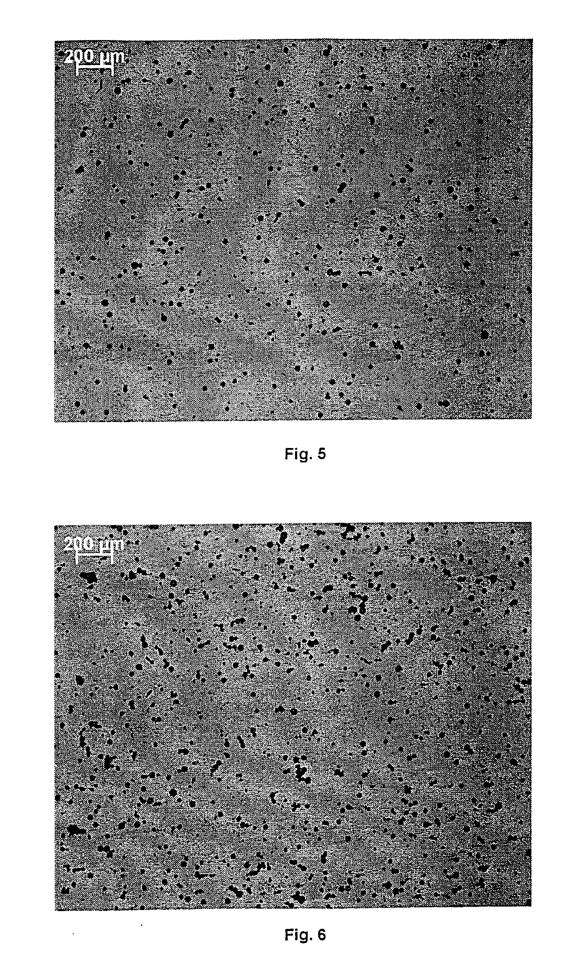

Nach dem unter Ausführungsbeispiel 2 beschriebenen Verfahren wurden Gleitringe mit einer niedrigeren Gesamtporosität hergestellt. Die Zusammensetzung war wie folgt: Sprühgranulat: 98,22% und PMMA: 1,78%. Die Gesamtporosität der gesinterten Ringe beträgt 3,77%. Der Nenndurchmesser der Poren liegt in dem selben Bereich wie beim Ausführungsbeispiel 1. Figur 5 zeigt die Verteilung der Poren auf der angeschliffenen Oberfläche der gesinterten Ringe.

### Ausführungsbeispiel 4:

### Gesamtzusammensetzung zu 100%:

**Anorganische Werkstoffe:**

| | |
|---|---|
| Alpha-Siliciumcarbid (SiC) | 76,47 % |
| Zircondiborid (ZrB₂) | 9,07 % |
| Kohlenstoff (C) | 2,93 % |
| Bor (B) | 0,44% |

**Organische Bestandteile (Binder, Dispergiermittel):**

| | |
|---|---|
| Dispergiermittel | 2,12 % |
| Wachsbinder | 1,78 % |
| Polyethylenglykolbinder | 1,78 % |
| Acrylatbinder | 1,78 % |

**Porosierungsmittel:**

| | |
|---|---|
| Polymethylmethacrylat (PMMA) | 3,63 % |

Nach dem unter Ausführungsbeispiel 2 beschriebenen Verfahren wurden Gleitringe mit einer höheren Gesamtporosität hergestellt. Die Zusammensetzung war wie folgt: Sprühgranulat: 96,37% und PMMA: 3,63%. Die Gesamtporosität der gesinterten Ringe beträgt 7,69%. Der Nenndurchmesser der Poren liegt in dem selben Bereich wie beim Ausführungsbeispiel 1. Figur 6 zeigt die Verteilung der Poren auf der angeschliffenen Oberfläche der gesinterten Ringe.

## Patentansprüche

1. Gesinterte Siliciumcarbidkörper- mit einer Porosität aus nicht zusammenhängenden, geschlossenen Poren, die gleichmäßig im Werkstoff der Körper verteilt sind, die Poren kugelförmig sind und einen Nenndurchmesser aufweisen, **dadurch gekennzeichnet, dass** die Porosität 2 bis 12 Vol.-%, der Nenndurchmesser der Poren 10 µm bis 48 µm beträgt und der anorganische, der keramische Werkstoff, sich aus Alpha-Siliciumcarbid (SiC), Zirkondiborid (ZrB₂), Kohlenstoff (C) und Bor (B) zusammensetzt.

2. Gesinterte Siliciumcarbidkörper nach Anspruch 1, **dadurch gekennzeichnet, dass** die kugelförmigen Poren einen Nenndurchmesser von 15 µm bis 45 µm aufweisen.

3. Verfahren zur Herstellung von gesinterten Siliziumcarbidkörpern nach einem der Ansprüche 1 oder 2, **dadurch gekennzeichnet, dass** das Porosierungsmittel den anorganischen, keramischen Ausgangsstoffen der Sinterkörper durch Suspendieren in einem geeigneten flüssigen Medium, anschließendem Mischen mit den anorganischen Ausgangsstoffen, Zugabe und Homogeniseren der organischen Bindemittel und nachfolgendem Sprühtrocknen (Sprühgranulierung) beigemischt wird, dass die Formgebung durch Formpressen erfolgt und nach der Formgebung die zur Herstellung der Sinterkörper erforderliche Wärmebehandlung mittels Pyrolyse und Sintern erfolgt.

4. Verfahren zur Herstellung von gesinterten Siliziumcarbidkörpern nach einem der Ansprüche 1 oder 2, **dadurch gekennzeichnet, dass** das Porosierungsmittel in der Suspension der anorganischen und organischen Rohstoffkomponenten des Werkstoffs dispergiert wird, dass die Formgebung durch Formpressen erfolgt und nach der Formgebung die zur Herstellung der Sinterkörper erforderliche Wärmebehandlung mittels Pyrolyse und Sintern erfolgt.

5. Verfahren zur Herstellung von gesinterten Siliziumcarbidkörpern nach einem der Ansprüche 1 oder 2, **dadurch gekennzeichnet,**
**dass** die Suspension der anorganischen und organischen Rohstoffkomponenten des Werkstoffs getrocknet wird und dass das Porosierungsmittel im trockenen Zustand mit den bereits gemischten anorganischen und organischen Komponenten homogen gemischt wird. dass die Formgebung durch Formpressen erfolgt und nach der Formgebung die zur Herstellung der Sinterkörper erforderliche Formgebung und die Wärmebehandlung mittels Pyrolyse und Sintern erfolgt.

6. Verfahren gemäß einem der Ansprüche 3 bis 5, **dadurch gekennzeichnet,**
**dass** als Porosierungsmittel Ausbrennstoffe verwendet werden wie Polymere, Wachse Stärken oder Cellulose.

7. Verfahren gemäß Anspruch 6 **dadurch gekennzeichnet,**
**dass** als Porosierungsmittel Polymethylmethacrylat (PMMA) verwendet wird.

8. Verfahren gemäß Anspruch 7 **dadurch gekennzeichnet,**
**dass** das Porosierungsmittel in einer Menge von 0,70 bis 5,40 Gew.-% zugegeben wird.

9. Verfahren gemäß einem der Ansprüche 7 oder 8 **dadurch gekennzeichnet,**
**dass** der Durchmesser der Teilchen des Porosierungsmittels vor der Verdichtung des Grünkörpers im Bereich von 18 µm bis 57 µm liegt.

10. Verfahren gemäß Anspruch 9 **dadurch gekennzeichnet,**
**dass** der Anteil der Teilchen mit Durchmessern zwischen 30 µm und 45 µm bei 80% der Gesamtmenge liegt.

## Claims

1. Sintered silicon carbide bodies having a porosity of unconnected, closed pores, which are uniformly distributed in the material of the bodies, are spherical and have a nominal diameter, **characterised in that** the porosity is 2 to 12 vol.%, the nominal diameter of the pores is 10 µm to 48 µm, and the inorganic, ceramic material is made up of alpha-silicon carbide (SiC), zirconium diboride (ZrB₂), carbon (C) and boron (B).

2. Sintered silicon carbide bodies according to claim 1, **characterised in that** the spherical pores have a nominal diameter of 15 µm to 45 µm.

3. A process for the production of sintered silicon carbide bodies according to one of claims 1 or 2, **characterised in that** the pore-forming agent is mixed with the inorganic, ceramic starting materials of the sintered bodies by suspension in a suitable liquid medium, subsequent mixing with the inorganic starting materials, addition and homogenization of the organic binders and then spray-drying (spray-granulation), the shaping takes place by compression-moulding, and, after shaping, the heat-treatment required for the production of the sintered bodies takes place by means of pyrolysis and sintering.

4. A process for the production of sintered silicon carbide bodies according to one of claims 1 or 2, **characterised in that** the pore-forming agent is dispersed in the suspension of the inorganic and organic raw-material components of the material, the shaping takes place by compression-moulding, and, after shaping, the heat-treatment required for the production of the sintered bodies takes place by means of pyrolysis and sintering.

5. A process for the production of sintered silicon carbide bodies according to one of claims 1 or 2, **characterised in that** the suspension of the inorganic and organic raw-material components of the material is dried, and the pore-forming agent is homogeneously mixed in the dry state with the already mixed inorganic and organic components, the shaping takes place by compression-moulding, and, after shaping, the shaping and heat-treatment required for the production of the sintered bodies take place by means of pyrolysis and sintering.

6. A process in accordance with one of claims 3 to 5, **characterised in that** opening materials, such as polymers, waxes, starches or cellulose, are used as pore-forming agents.

7. A process in accordance with claim 6, **characterised in that** polymethyl methacrylate (PMMA) is used as the pore-forming agent.

8. A process in accordance with claim 7, **characterised in that** the pore-forming agent is added in a quantity of 0.70 to 5.40 wt.%.

9. A process in accordance with one of claims 7 or 8, **characterised in that** the diameter of the particles of the pore-forming agent is in the range of 18 µm to 57 µm before the compaction of the green body.

10. A process according to claim 9, **characterised in that** the proportion of particles with diameters of between 30 µm and 45 µm is 80% of the total quantity.

## Revendications

1. Corps fritté en carbure de silicium, présentant une certaine porosité qui provient de pores fermés, non connexes et uniformément répartis au sein du matériau du corps, lesquels pores sont sphériques et présentent un diamètre nominal, **caractérisé en ce que** la porosité vaut de 2 à 12 % en volume, le diamètre nominal des pores vaut de 10 à 48 µm, et le matériau céramique inorganique se compose de carbure de silicium alpha (SiC), de diborure de zirconium (ZrB₂), de carbone (C) et de bore (B).

2. Corps fritté en carbure de silicium, conforme à la revendication 1, **caractérisé en ce que** les pores sphériques présentent un diamètre nominal qui vaut de 15 µm à 45 µm.

3. Corps fritté en carbure de silicium, conforme à l'une des revendications 1 et 2, **caractérisé en ce que** l'agent porogène a été mélangé aux matières premières céramiques inorganiques du corps fritté par mise en suspension dans un milieu liquide approprié, puis mélange avec les matières premières inorganiques, addition du liant organique et homogénéisation, et ensuite séchage par pulvérisation (granulation par pulvérisation), **en ce que** la mise en forme a été réalisée par compression, et **en ce qu'**après la mise en forme, le traitement thermique nécessaire pour la production du corps fritté a été effectué par pyrolyse et frittage.

4. Procédé de production de corps frittés en carbure de silicium conformes à l'une des revendications 1 et 2, **caractérisé en ce que** l'on disperse l'agent porogène dans la suspension des composants bruts inorganiques et organiques du matériau, **en ce qu'**on réalise la mise en forme par compression, et **en ce qu'**après la mise en forme, c'est par pyrolyse et frittage qu'on effectue le traitement thermique nécessaire pour la production du corps fritté.

5. Procédé de production de corps frittés en carbure de silicium conformes à l'une des revendications 1 et 2, **caractérisé en ce que** l'on fait sécher la suspension des composants bruts inorganiques et organiques du matériau, **en ce qu'**on mélange l'agent porogène, à sec, avec les composants inorganiques et organiques déjà mélangés, pour en faire un mélange homogène, **en ce qu'**on réalise la mise en forme par compression, et **en ce qu'**après la mise en forme, c'est par pyrolyse et frittage qu'on effectue le traitement thermique nécessaire pour la production du corps fritté.

6. Procédé conforme à l'une des revendications 3 à 5, **caractérisé en ce que** l'on utilise, en tant qu'agent porogène, des matières combustibles telles que polymères, cires, amidons ou cellulose.

7. Procédé conforme à la revendication 6, **caractérisé en ce que** l'on utilise, en tant qu'agent porogène, un poly(méthacrylate de méthyle) (PMMA).

8. Procédé conforme à la revendication 7, **caractérisé en ce que** l'on ajoute l'agent porogène en une proportion de 0,70 à 5,40 % en poids.

9. Procédé conforme à l'une des revendications 7 et 8, **caractérisé en ce que** le diamètre des particules d'agent porogène, avant la compaction du corps cru, vaut de 18 µm à 57 µm.

10. Procédé conforme à la revendication 9, **caractérisé en ce que** la fraction des particules dont le diamètre est compris entre 30 µm et 45 µm représente 80 % de la quantité totale.
